# EUROPEAN PATENT SPECIFICATION

(11) **EP 3 469 888 B1**
(45) Date of publication and mention of the grant of the patent: **10.08.2022**
(21) Application number: 17195738.4
(22) Date of filing: 10.10.2017
(51) Int. Cl.: A01G 13/02

(54) **BIODEGRADABLE MULCHING FILM**
BIOLOGISCH ABBAUBARE MULCHFOLIE
FILM DE PAILLAGE BIODÉGRADABLE

(43) Date of publication of application: 17.04.2019
(73) Proprietor: Artinova Speciality Papers AB, 668 62 Ed (SE)
(72) Inventor: ÅKERBERG, Lars-Åke, 784 34 Borlänge (SE)
(74) Representative: Brann AB

(56) References cited:
- US-A- 4 782 626
- US-A- 5 866 269
- US-A1- 2003 056 433
- US-A1- 2005 246 949

## Description

### Technical field of the Invention

The present invention relates generally to the field of means for enhancing growth of cultivated plants. Further, the present invention relates specifically to the field of environmental friendly mulching film suitable for agricultural production and horticultural production, especially biodegradable mulching films. The inventive biodegradable mulching film comprises a base substrate, wherein the base substrate is made of paper and the mulching film comprises a coating, wherein the coating is applied to an upper side of the base substrate. The invention also relates to a method for manufacturing such a biodegradable mulching film and use of such a biodegradable mulching film in agricultural production.

### Background of the Invention

Agricultural production, especially environmental friendly and/or ecologic agricultural production, comprises the inevitable need of weed control due to the none-use of weed killer. Weed control, and especially mechanical/hand-weeding, requires a huge amount of manpower and if the weeds are not removed it will delay and prevent the cultivated plants from growing as desired and the crop yield will be less than expected. A decreasing harvest/crops leads to less economic yield for the producer. Thereto, especially in environmental friendly and/or ecologic production, there is always a desire for enhanced growth of the cultivated plants, due to the limited or non-use of fertilizer.

In order to prevent or control weeds, the farmer conventionally covers the soil/land/beds with a plastic film that successfully prevents or inhibits the growth of weeds. However, after the crops are harvested, the farmer has to mechanically remove the plastic film. This is time consuming and the plastic film almost always becomes in shreds during the removal. Thus, in most application at least some of the plastic film is likely left in the field and the plastic particles will accumulate in the soil, and eventually the accumulation of particles from the plastic films will cause crop yield reduction. Thus, the plastic film cannot be decomposed naturally resulting in environmental pollution and will influence the ecological environment if not completely removed, and thereto the plastic film also have a negative environmental impact once it is collected and wasted. Millions of acres of land are cultivated under plastic film worldwide each year. Thereto, some plastic films are too tight leading to mould and mildew underneath the plastic film.

Today, there are efforts made to provide biodegradable mulching films made of plastic. However, these so-called biodegradable plastic mulching films will not entirely decompose in the soil and they are more costly than conventional plastic films.

### Object of the Invention

The present invention aims at obviating the aforementioned disadvantages and failings of previously known mulching films, and at providing an improved biodegradable mulching film. A primary object of the present invention is to provide an improved mulching film of the initially defined type, wherein the mulching film prevents/inhibits weed and enhances growth of the cultivated plants and enhances crops.

It is another object of the present invention to provide a mulching film, which is configured to decompose after about one growing cycle, approximately 3 months. It is another object of the present invention to provide a mulching film, which is configured to be ploughed into the soil after the crop is harvested, i.e. which is nutritive for the soil. It is another object of the present invention to provide a mulching film, which has appropriate permeability in order to prevent mould and mildew underneath the mulching film. It is another object of the present invention to provide a mulching film, which contains no harmful substances and most not be removed from the field.

### Summary of the Invention

According to the invention at least the primary object is attained by means of the initially defined biodegradable mulching film having the features defined in the independent claim. Preferred embodiments of the present invention are further defined in the dependent claims.

According to a first aspect of the present invention, there is provided a biodegradable mulching film of the initially defined type, which is characterized in that the mulching film is a water and air permeable mulching film, wherein the coating in a wet form comprises at least:
- an inorganic filler in the range 60-74 %-weight,
- water in the range 2-8 %-weight,
- a binder in the range 15-25 %-weight, and
- a pigment paste in the range 8-13 %-weight.

According to a second aspect of the present invention, there is provided a method for manufacturing such a biodegradable mulching film. The present invention is also directed towards the use of such a biodegradable mulching film in agricultural production.

Thus, the present invention is based on the insight that it is no point in itself to have a mulching film that has a longer lifetime than the length of the actual growing cycle, and that such a mulching film can be made by using renewable and sustainable paper in the base substrate of the mulching film, and by applying an appropriate coating to the upper side of the base substrate.

According to a preferred embodiment of the present invention, the base substrate has a weight equal to or more than 60 g/m² and equal to or less than 90 g/m². This means that, if the mulching films are used in the same climate, a lower surface weight of the base substrate will entail a shorter lifetime before decomposition of the mulching film and a greater surface weight of the base substrate will entail a longer lifetime before decomposition of the mulching film.

According to a preferred embodiment of the present invention, the main ingredient of the base substrate is chemical pulp.

According to a preferred embodiment of the present invention, the weight of the coating in dry form is equal to or more than 6 g/m² and equal to or less than 12 g/m². This means that, if the mulching films are used in the same climate, a lower surface weight of the coating will entail a higher permeability and shorter lifetime before decomposition of the mulching film and a greater surface weight of the c coating will entail a lower permeability and longer lifetime before decomposition of the mulching film.

According to a preferred embodiment of the present invention, the coating in a wet form comprises at least an inorganic filler in the range 60-74 %-weight, water in the range 2-8 %-weight, a binder in the range 15-25 %-weight, and a pigment paste in the range 8-13 %-weight. Wet form of the coating means the composition of the coating when the coating is mixed and applied to the base substrate. This list is not exhaustive and does not need to amount to 100 %-weight.

According to a preferred embodiment of the present invention, the moister content of the mulching film is in the range 3-5%.

According to a preferred embodiment of the present invention, the tensile strenght of the mulching film in the machine direction is equal to or more than 4 kN/m and equal to or less than 10 kN/m. Thereto, the tensile strenght of the mulching film in the cross direction is equal to or more than 1 kN/m and equal to or less than 5 kN/m.

According to a preferred embodiment of the present invention, tearing resistance of the mulching film in the machine direction is equal to or more than 500 mN and equal to or less than 800 mN. Thereto, the tearing resistance of the mulching film in the cross direction is equal to or more than 600 mN and equal to or less than 1200 mN.

According to a preferred embodiment of the present invention, the bursting strength of the mulching film is equal to or more than 300 kPa and equal to or less than 400 kPa.

Further advantages with and features of the invention will be apparent from the other dependent claims as well as from the following detailed description of preferred embodiments.

### Further elucidation of prior art

Document US 5866269 discloses a mulching film comprising a base substrate, wherein the base substrate is made of paper and that the mulching film further comprises a coating applied to an upper side and a coating applied to a lower side of the base substrate. The coating is based on an organic latex resistant to water permeability.

Documents US 2003/056433 A1, US 4 782 626 A and US 2005/246949 describe other paper-based mulching sheets with a coating.

### Brief description of the drawings

A more complete understanding of the abovementioned and other features and advantages of the present invention will be apparent from the following detailed description of preferred embodiments in conjunction with the appended drawings, wherein:
Fig. 1 is a schematic cross sectional side view of the inventive mulching film, greatly magnified, and
Fig. 2 is a schematic illustration of a machine applying the inventive mulching film over a planting bed.

### Detailed description of preferred embodiments of the invention

The present invention relates generally to the technical field of means for enhancing growth of cultivated plants, and specifically to biodegradable mulching films suitable for use in agricultural production and horticultural production. Such mulching films are mostly used for covering crop land and garden beds. The inventive mulching film will prevent weeds and eliminate/reduce the use of weed killer, will reduce the amount of water loss from the soil due to evaporation, will keep the crops away from direct contact with the soil, will keep the soil humid and porous, will prevent the origin of mould, etc.

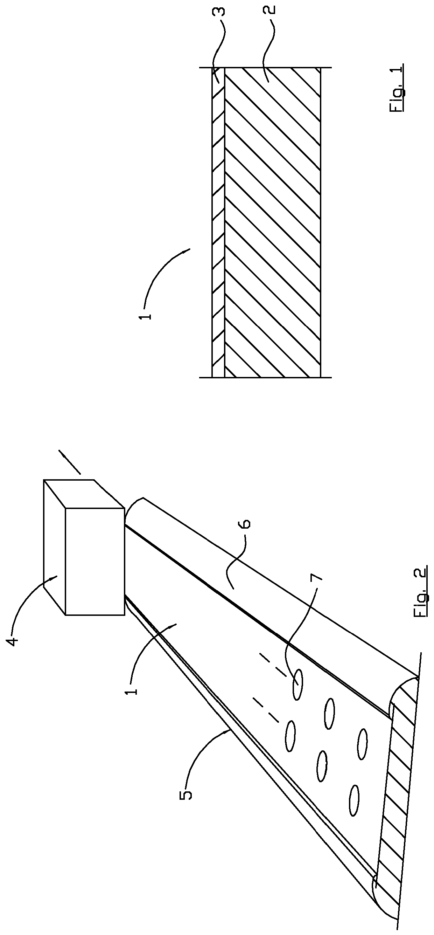

Reference is initially made to figure 1, that discloses a schematic cross sectional side view of an inventive mulching film, generally designated 1. The mulching film 1 comprises a base substrate 2 made of paper and a coating 3 applied to an upper side of the base substrate 2. It shall be pointed out that in reality there is no such sharp interface between the base substrate 2 and the coating 3 as disclosed in figure 1. The coating 3 will not only adhere to the surface of the base substrate 2 but some of the coating 3 will penetrate the upper part of the base substrate 2 and thereby the bond between the coating 3 and the base substrate 2 is increased.

The base substrate 2 is preferably constituted by one single layer that is homogenous, i.e. has more or less equal configuration/structure and physical properties throughout the entire base substrate 2. According to an alternative embodiment the base substrate is constituted by two or more layers, acting like a single structure. The paper of the base substrate 2 comprises chemical pulp as a main ingredient, wherein the pulp preferably is coniferous wood pulp and wherein the pulp is preferably long-fiber pulp. Thereto, the paper of the base substrate 2 in conventional way comprises a filler and a binder, and is preferably an off-the-shelf kraft paper/kraft liner.

It shall be pointed out that the paper of the base substrate 2 may comprise an environmental friendly fertilizer.

The base substrate 2 has a weight, i.e. the so-called surface weight, equal to or more than 60 g/m² (grams per square meter) and equal to or less than 90 g/m², preferably equal to or more than 65 g/m² and preferably equal to or less than 80 g/m², and most preferably about 70 g/m². The weight of the base substrate 2 has direct effect on the lifetime/life span of the mulching film 1 before it decomposes. When the mulching film 1 decompose the physical properties drastically decrease and the mulching film 1 will be considered as decomposed when the mulching film 1 no longer act as a connected product if handled but will shred. During normal weather conditions a weight of 60 g/m² corresponds to a lifetime before decomposition of about 10-12 weeks and a weight of 90 g/m² corresponds to a lifetime before decomposition of about 16-18 weeks. The most preferred weight of 70 g/m² corresponds to 12-14 weeks, which is a typical and normal length of a growing cycle. Thus, the lifetime of the mulching film 1 may be predicted and customized, and be adapted to the expected growing cycle of the different plants and the local environment. After the growing cycle, i.e. when the crops have been harvested, the mulching film 1 is ploughed into the soil and will act as a fertilizer for the soil. Thus, after use the mulching film 1 will disintegrate/decompose/degrade and will become part of the soil without any negative environmental impact.

The nature and character of the coating 3 will also effect the expected lifetime of the mulching film 1. The coating 3 is prepared and applied to the base substrate 2 in wet form. When the mulching film 1 is sold, handled and applied to the land/soil the coating 3 is in dry form. The weight, i.e. the surface weight, of the coating 3 in dry form is equal to or more than 6 g/m² and equal to or less than 12 g/m², preferably equal to or more than 8 g/m² and preferably equal to or less than 11 g/m², and most preferably about 10 g/m². The weight of the coating 3, i.e. more precisely the thickness and nature of the coating, has direct effect on the lifetime of the mulching film 1 before it decomposes. A thin and/or very porous coating 3 will provide a shorter lifetime before decomposition of the mulching film 1, and a thick and/or very compact/tight coating 3 will provide a longer lifetime before decomposition of the mulching film 1. The weight of the coating 3, i.e. the thickness of the coating, has direct effect on the permeability of the mulching film 1 with regards to moist and air. A thin and/or very porous coating 3 will increase the permeability of the mulching film 1, and a thick and/or compact/tight coating 3 will decrease the permeability of the mulching film 1.

Due to the porosity/permeability of the mulching film 1 water will be able to penetrate through the mulching film 1 and reach the soil, and the soil will be kept humid and porous, entailing that the rot system of the plants will expand easier. Thereto, there will be an exchange of air and moist through the mulching film 1 in order to prevent origin of mould and mildew underneath the mulching film 1.

The coating 3 in wet form, i.e. when the coating 3 is mixed and applied to the base substrate 2, comprises at least an inorganic filler, a binder, a pigment paste and water. Thereto, the coating 3 in wet form may comprise an antifoaming agent.

The inorganic filler is in the range 60-74 %-weight of the coating 3 in wet form. The amount of inorganic filler in the coating 3 will at least have effect on the time for drying of the coating, and on the viscosity and uniformity of the coating 3 in wet form. Quantities of inorganic filler above the mentioned range will lead to too low viscosity and thereby pore levelling, and the coating 3 will have lumps, and thereto the cost of the mulching film 1 will increase. Quantities of inorganic filler below the mentioned range will lead to too long drying of the coating 3. The inorganic filler is preferably in the range 64-70 %-weight of the coating in wet form. Most preferably the in organic filler is about 67 %-weight of the coating 3 in wet form, and in an exemplary batch the amount of inorganic filler is about 1200 kg. The inorganic filler preferably comprises calcium carbonate, for example natural ground calcium carbonate, and one available inorganic filler product is constituted by "Hydrocarb 60-ME 78%".

The binder is in the range 15-25 %-weight of the coating in wet form. The amount of binder in the coating 3 will at least have effect on the ability for the coating 3 to attach/connect to the base substrate 2 and on the porosity/permeability of the coating 3 in dry form. Quantities of binder above the mentioned range will lead to too low porosity/permeability, and thereto the cost of the mulching film 1 will increase. Quantities of binder below the mentioned range will lead to imperfect attachment/connection between the coating 3 and the base substrate 2 and thereby the coating 3 will flake and lead to much shorter lifetime of the mulching film 1. The binder is preferably in the range 18-22 %-weight of the coating 3 in wet form. Most preferably the binder is about 20 %-weight of the coating in wet form, and in the exemplary batch the amount of binder is about 350-360 kg. The binder is preferably constituted by a co-polymeric latex, preferably comprising vinyl acetate and/or vinyl ester and a cellulose derivative, and one available binder product is constituted by "Collano/Enorex 50 CVM".

The pigment paste is in the range 8-13 %-weight of the coating in wet form. The amount of pigment paste in the coating 3 will at least have effect on porosity/permeability of the coating 3 in dry form and on the lifetime of the mulching film 1. Quantities of pigment paste above the mentioned range will lead to too low porosity/permeability, and thereto the cost of the mulching film 1 will increase. Quantities of pigment paste below the mentioned range will lead to inadequate blockage of the sun rays reaching the base substrate 2, i.e. the base substrate 2 will show through the coating 3, and thereby a much shorter lifetime of the mulching film 1. The pigment paste is preferably in the range 10-11 %-weight of the coating 3 in wet form. Most preferably the pigment paste is about 10,5 %-weight of the coating 3 in wet form, and in the exemplary batch the amount of pigment paste is about 185-190 kg. The pigment paste preferably comprises about 25-35 % pigment and the pigment paste is preferably water based, and one available pigment paste product is constituted by "Vocafil black 7".

The pigment of the pigment paste is preferably made of carbon, and thereby the coating 3 becomes black. A black, brown or dark coating 3 will absorb the heat from the sun and increase the soil temperature. An increased soil temperature will allow earlier planting, will entail faster growth of the plants and will shorten the growing cycle. It shall also be pointed out that by using a light pigment rendering a white or light coating 3 the heat from the sun will be reflected and the soil temperature will be reduced. A decreased soil temperature is desirable in order to slow down the growth of the plants, and to prevent evaporation of the moist in the soil, in really hot environments.

The water is in the range 2-8 %-weight of the coating 3 in wet form. The amount of water in the coating 3 will at least have effect on the time for drying of the coating, and on the viscosity and uniformity of the coating 3 in wet form. Quantities of water below the mentioned range will lead to too low viscosity and thereby pore levelling, and the coating 3 will have lumps. Quantities of water above the mentioned range will lead to too long drying of the coating 3 and the coating 3 will have pore covering. The water is preferably in the range 2-4 %-weight of the coating 3 in wet form. Most preferably the water is about 2,5 %-weight of the coating 3 in wet form, and in the exemplary batch the amount of water is about 40-50 kg.

The antifoam agent is in the range 0,01-0,03 %-weight of the coating 3 in wet form. The antifoam agent may be water based, oil based, silicon based, etc., and most preferably the antifoam agent is water based. The amount of antifoam agent in the coating 3 will at least have effect on the time for drying of the coating, and on the uniformity of the coating in wet form. Quantities of antifoam agent above the mentioned range will lead to too long drying of the coating 3, and thereto the cost of the mulching film 1 will increase. Quantities of the antifoam agent below the mentioned range might increase the risk of having a foaming coating having blisters and thereby uneven covering. The antifoam agent is preferably in the range 0,015-0,025 %-weight of the coating 3 in wet form. Most preferably the antifoam agent is about 0,02 %-weight of the coating 3 in wet form, and in the exemplary batch the amount of antifoam agent is about 0,4 kg. One available antifoam agent product is constituted by "BIM CF 7460".

The method for manufacturing an inventive mulching film 1 comprises the steps of providing the base substrate 2 made of paper, applying the coating 3 to the upper side of the base substrate 2, and drying the mulching film 1.

The base substrate 2 is preferably provided as an elongated web rolled on a core (reel) or rolled without a core (roll). The web is fed from the reel/roll into a coating station. The coating 3 is preferably applied using so-called roll coating, i.e. the coating in wet form is picked up by means of a first roll from a trough, transferred from the first roll to an applicator roll and then transferred from the applicator roll to the web. The distance between the first roll and the applicator roll is adjustable in order to adjust the amount/thickness of coating 3 applied to the base substrate/web. It shall be pointed out that also other types of conventional coating methods are conceivable, such as spray coating.

After the coating 3 is applied to the base substrate 2, the mulching film 1 is dried before the mulching film 1 is rolled. The phrase, the coating 3 is applied to the upper side of the base substrate 2, refers to the upper side of the mulching film 1 when the mulching film 1 is used in the field. Thus, the coating 3 shall be applied to the side of the base substrate 2 configured to be turned upwards, away from the soil. Thus, during the actual coating of the base substrate the coating can be applied from underneath the web or from above the web, but it is preferred that the coating 3 is applied from above the web. It is also conceivable that the web/bas substrate is fed in a direction inclined upwards or downwards during coating.

The moister content of the mulching film 1 in wet form, i.e. when the coating 3 is just applied to the base substrate 2, is in the range 40-70%, and the moister content of the mulching file 1 in dry form, i.e. when rolled and sold, is in the range 3-5%. The moister content, i.e. the ratio between the mass of water in a moist sample and the total mass of the moist sample, is determined according to the standardized procedure ISO 287, TAPPI - T 412, or equivalent.

The tensile strenght of the mulching film 1 in the machine direction is equal to or more than 4 kN/m (kilo Newton per meter) and equal to or less than 10 kN/m. The tensile strength of the mulching film 1 in the machine direction is preferably equal to or more than 6 kN/m. The tensile strenght of the mulching film 1 in the cross direction is equal to or more than 1 kN/m and equal to or less than 5 kN/m. The tensile strength of the mulching film 1 in the cross direction is preferably equal to or more than 3 kN/m. The tensile strength is determined according to the standardized procedure ISO 1924, TAPPI - T 494, or equivalent.

The tearing resistance of the mulching film 1 in the machine direction is equal to or more than 500 mN (milli Newton) and equal to or less than 800 mN. The tearing resistance of the mulching film 1 in the cross direction is equal to or more than 600 mN and equal to or less than 1200 mN. The tearing resistance is determined according to the standardized procedure ISO 1974, TAPPI - T 414, or equivalent.

The bursting strength of the mulching film 1 is equal to or more than 300 kPa (kilo Pascal) and equal to or less than 400 kPa. The bursting strength is determined according to the standardized procedure ISO 2758, TAPPI -T 403, or equivalent.

Reference is now made to figure 2. The laying of the mulching film 1 is preferably performed using a conventional machine for laying mulching films, generally designated 4. The machine 4 is pulled/moved over the field by means of a tractor or the like, creating planting beds 5 covered by the mulching film 1 that is automatically unreeled from the machine 4 and applied to the planting bed 5. The machine preferably generates raised planting beds. The machine 4 covers the longitudinal edges of the mulching film 1 with soil banks 6 in order to hold the mulching film 1.

The mulching film layer machine 4 may also comprise a planting equipment, or the planting equipment may be separate from the mulching film layer machine 4. The planting equipment may comprise rotating drum/drums with circumferentially distributed spikes or the like, configured to penetrate/puncture the mulching film 1, whereby plants are manually or automatically placed in the holes 7.

### Feasible modifications of the Invention

The invention is not limited only to the embodiments described above and shown in the drawings, which primarily have an illustrative and exemplifying purpose.

The present invention is defined by the wording of the appended claims and thus, the equipment may be modified in all kinds of ways within the scope of the appended claims.

For instance, it shall be pointed out that the lower side of the base substrate may comprise the same coating as the upper side of the base substrate or another coating. For instance it is conceivable to have a coating on the lower side of the base substrate comprising a fertilizer.

It shall also be pointed out that the mulching film can be provided as sheets and not only as a reel/roll, sheets are especially suitable for horticulture production. The mulching film may also be used when planting coniferous/fir trees, i.e. for forest/wood production, wherein a separate sheet is applied for each tree plant. The mulching film prevents grass and the like to compete with the tree plant. The coating of the mulching film may comprise an odor/scent repelling elks and the like from eating the tree plants.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A biodegradable mulching film (1) comprising a base substrate (2), wherein the base substrate is made of paper and that the mulching film (1) further comprises a coating (3), wherein the coating is applied to an upper side of the base substrate (2), the upper side being the side of the base substrate away from the soil when the mulching film is used in the field, **characterized in that** the mulching film (1) is a water and air permeable mulching film, wherein the coating (3) in a wet form comprises at least:
- an inorganic filler in the range 60-74 %-weight,
- water in the range 2-8 %-weight,
- a binder in the range 15-25 %-weight, and
- a pigment paste in the range 8-13 %-weight.

2. The biodegradable mulching film (1) according to claim 1, wherein the base substrate (2) has a weight equal to or more than 60 g/m² and equal to or less than 90 g/m², preferably equal to or more than 65 g/m² and preferably equal to or less than 80 g/m².

3. The biodegradable mulching film (1) according to claim 1 or 2, wherein the main ingredient of the base substrate (2) is chemical pulp.

4. The biodegradable mulching film (1) according to any of claims 1-3, wherein the weight of the coating (3) in dry form is equal to or more than 6 g/m² and equal to or less than 12 g/m², preferably equal to or more than 8 g/m² and preferably equal to or less than 11 g/m².

5. The biodegradable mulching film (1) according to any preceding claim, wherein the moister content of the mulching film (1) is in the range 3-5%.

6. The biodegradable mulching film (1) according to any preceding claim, wherein the tensile strenght of the mulching film (1) in the machine direction is equal to or more than 4 kN/m and equal to or less than 10 kN/m.

7. The biodegradable mulching film (1) according to any preceding claim, wherein the tensile strenght of the mulching film (1) in the cross direction is equal to or more than 1 kN/m and equal to or less than 5 kN/m.

8. The biodegradable mulching film (1) according to any preceding claim, wherein the tearing resistance of the mulching film (1) in the machine direction is equal to or more than 500 mN and equal to or less than 800 mN.

9. The biodegradable mulching film (1) according to any preceding claim, wherein the tearing resistance of the mulching film (1) in the cross direction is equal to or more than 600 mN and equal to or less than 1200 mN.

10. The biodegradable mulching film (1) according to any preceding claim, wherein the bursting strength of the mulching film (1) is equal to or more than 300 kPa and equal to or less than 400 kPa.

11. A method for manufacturing a biodegradable mulching film according to any of claims 1-10, **characterized by** the steps of:
- providing a base substrate (2) made of paper,
- applying a coating (3) to the upper side of the base substrate (2), and
- drying the mulching film (1).

12. Use of a biodegradable mulching film according to any of claims 1-10 in agricultural production, horticulture production or forest production.

## Patentansprüche

1. Biologisch abbaubare Mulchfolie (1), umfassend ein Basissubstrat (2), wobei das Basissubstrat aus Papier hergestellt ist und die Mulchfolie (1) ferner eine Beschichtung (3) umfasst, wobei die Beschichtung auf eine obere Seite des Basissubstrats (2) aufgebracht ist, wobei die obere Seite die vom Boden abgewandte Seite des Basissubstrats ist, wenn die Mulchfolie auf dem Feld verwendet wird, dadurch charakterisiert, dass die Mulchfolie (1) eine wasser- und luftdurchlässige Mulchfolie ist, wobei die Beschichtung im nassen Zustand mindestens umfasst:
- einen anorganischen Füllstoff in einem Bereich von 60-74 Gew.-%,
- Wasser in einem Bereich von 2-8 Gew.-%,
- ein Bindemittel in einem Bereich von 15-25 Gew.-%, und
- eine Pigmentpaste in einem Bereich von 8-13 Gew.-%.

2. Biologisch abbaubare Mulchfolie (1) gemäß Anspruch 1, wobei das Basissubstrat (2) ein Gewicht von gleich oder mehr als 60 g/m² und gleich oder weniger als 90 g/m², bevorzugt von gleich oder mehr als 65 g/m² und bevorzugt von gleich oder weniger als 80 g/m² aufweist.

3. Biologisch abbaubare Mulchfolie (1) gemäß Anspruch 1 oder 2, wobei der Hauptbestandteil des Basissubstrats (2) chemischer Zellstoff ist.

4. Biologisch abbaubare Mulchfolie (1) gemäß einem der Ansprüche 1-3, wobei das Gewicht der Beschichtung im trockenen Zustand gleich oder mehr als 6 g/m² und gleich oder weniger als 12 g/m², bevorzugt gleich oder mehr als 8 g/m² und gleich oder weniger als 11 g/m² beträgt.

5. Biologisch abbaubare Mulchfolie (1) gemäß einem der vorangehenden Ansprüche, wobei der Feuchtigkeitsgehalt der Mulchfolie (1) in einem Bereich von 3-5% liegt.

6. Biologisch abbaubare Mulchfolie (1) gemäß einem der vorangehenden Ansprüche, wobei die Zugfestigkeit der Mulchfolie (1) in der Maschinenrichtung gleich oder mehr als 4 kN/m und gleich oder weniger als 10 kN/m beträgt.

7. Biologisch abbaubare Mulchfolie (1) gemäß einem der vorangehenden Ansprüche, wobei die Zugfestigkeit der Mulchfolie (1) in der Querrichtung gleich oder mehr als 1 kN/m und gleich oder weniger als 5 kN/m beträgt.

8. Biologisch abbaubare Mulchfolie (1) gemäß einem der vorangehenden Ansprüche, wobei die Reißfestigkeit der Mulchfolie (1) in der Maschinenrichtung gleich oder mehr als 500 mN und gleich oder weniger als 800 mN beträgt.

9. Biologisch abbaubare Mulchfolie (1) gemäß einem der vorangehenden Ansprüche, wobei die Reißfestigkeit der Mulchfolie (1) in der Querrichtung gleich oder mehr als 600 mN und gleich oder weniger als 1200 mN beträgt.

10. Biologisch abbaubare Mulchfolie (1) gemäß einem der vorangehenden Ansprüche, wobei die Berstfestigkeit der Mulchfolie (1) gleich oder mehr als 300 kPa und gleich oder weniger als 400 kPa beträgt.

11. Verfahren zur Herstellung einer biologisch abbaubaren Mulchfolie gemäß einem der Ansprüche 1-10, charakterisiert durch die folgenden Schritte:
- Bereitstellen eines Basissubstrats (2), hergestellt aus Papier,
- Aufbringen einer Beschichtung (3) auf die obere Seite des Basissubstrats (2), und
- Trocknen der Mulchfolie (1).

12. Verwendung der biologisch abbaubaren Mulchfolie gemäß einem der Ansprüche 1-10 in der landwirtschaftlichen Produktion, der gartenbaulichen Produktion oder der forstwirtschaftlichen Produktion.

## Revendications

1. Film de paillage biodégradable (1) comprenant un substrat de base (2), dans lequel le substrat de base est constitué de papier et le film de paillage (1) comprend en outre un revêtement (3), dans lequel le revêtement est appliqué sur un côté supérieur du substrat de base (2), le côté supérieur étant le côté du substrat de base à l'opposé du sol lorsque le film de paillage est utilisé dans le champ, **caractérisé en ce que** le film de paillage (1) est un film de paillage perméable à l'eau et à l'air, dans lequel le revêtement (3) dans une forme mouillée comprend au moins :
- une charge inorganique dans la plage de 60 à 74 % en poids,
- de l'eau dans la plage de 2 à 8 % en poids,
- un liant dans la plage de 15 à 25 % en poids, et
- une pâte de pigment dans la plage de 8 à 13 % en poids.

2. Film de paillage biodégradable (1) selon la revendication 1, dans lequel le substrat de base (2) a un poids supérieur ou égal à 60 g/m² et inférieur ou égal à 90 g/m², de préférence supérieur ou égal à 65 g/m² et de préférence inférieur ou égal à 80 g/m².

3. Film de paillage biodégradable (1) selon la revendication 1 ou 2, dans lequel l'ingrédient principal du substrat de base (2) est une pâte chimique.

4. Film de paillage biodégradable (1) selon l'une quelconque des revendications 1 à 3, dans lequel le poids du revêtement (3) sous forme sèche est supérieur ou égal à 6 g/m² et inférieur ou égal à 12 g/m², de préférence supérieur ou égal à 8 g/m² et de préférence inférieur ou égal à 11 g/m².

5. Film de paillage biodégradable (1) selon l'une quelconque des revendications précédentes, dans lequel la teneur en humidité du film de paillage (1) se trouve dans la plage de 3 à 5 %.

6. Film de paillage biodégradable (1) selon l'une quelconque des revendications précédentes, dans lequel la résistance à la traction du film de paillage (1) dans le sens machine est supérieure ou égale à 4 kN/m et inférieure ou égale à 10 kN/m.

7. Film de paillage biodégradable (1) selon l'une quelconque des revendications précédentes, dans lequel la résistance à la traction du film de paillage (1) dans la direction transversale est supérieure ou égale à 1 kN/m et inférieure ou égale à 5 kN/m.

8. Film de paillage biodégradable (1) selon l'une quelconque des revendications précédentes, dans lequel la résistance à la déchirure du film de paillage (1) dans le sens machine est supérieure ou égale à 500 mN et inférieure ou égale à 800 mN.

9. Film de paillage biodégradable (1) selon l'une quelconque des revendications précédentes, dans lequel la résistance à la déchirure du film de paillage (1) dans la direction transversale est supérieure ou égale à 600 mN et inférieure ou égale à 1200 mN.

10. Film de paillage biodégradable (1) selon l'une quelconque des revendications précédentes, dans lequel la résistance à l'éclatement du film de paillage (1) est supérieure ou égale à 300 kPa et inférieure ou égale à 400 kPa.

11. Procédé de fabrication d'un film de paillage biodégradable selon l'une quelconque des revendications 1 à 10, **caractérisé par** les étapes suivantes :
- fourniture d'un substrat de base (2) en papier,
- application d'un revêtement (3) au côté supérieur du substrat de base (2), et
- séchage du film de paillage (1).

12. Utilisation d'un film de paillage biodégradable selon l'une quelconque des revendications 1 à 10 dans la production agricole, la production horticole, ou la production forestière.
